# EUROPEAN PATENT APPLICATION

(11) **EP 2 308 297 A1**
(43) Date of publication of application: **13.04.2011**
(21) Application number: 09172397.3
(22) Date of filing: 07.10.2009
(51) Int. Cl.: A01N 25/10, A01N 25/24, A01N 25/26, A01N 25/32, A01N 61/00, A01P 13/00

(54) **Pesticidal composition for coating seed with a herbicide**

(71) Applicant: Syngenta Participations AG, 4332 Stein (CH)
(72) Inventor: The designation of the inventor has not yet been filed
(74) Representative: Hölscher, Ingo

(57) **Abstract**

The present invention relates to an agrochemical composition suitable for seed treatment comprising a herbicide which is mobile in the soil, and an adhesive polymer.

## Description

The present invention relates to agrochemical compositions suitable for seed treatment comprising a herbicide, and its use in the agricultural field.

Herbicides have been used to control weeds and undesired plants and vegetation in the agricultural field for decades. Commercially, they have generally been used in foliar and soil applied applications. Herbicides have not been commercially used for below-soil applications, such as treating seeds, as it was believed that herbicides generally would not have sufficient herbicidal activity or would cause damage to the crop. The present invention aims to overcome that prejudice.

It is an object of the present invention to provide novel compositions suitable for seed treatment which give herbicidal activity after sowing. By identifying and selecting the appropriate herbicides, compositions in accordance with the invention can now be applied and used for below soil application, in particular for seed treatment purposes, wherein the herbicides exhbit herbicidal activity around the planted seed. This enables an improved early crop establishment which may cause a larger root mass. By treating seeds with herbicide the total amount of herbicides can be reduced compared to conventional soil-applied herbicide treatments. In some cases even a first foliar spray with herbicides can become unnecessary. In addition, the composition of the invention may allow for an enhanced efficacy under difficult growing conditions (soil type, soil moisture, etc.). The invention also enables a more targeted weed control.

This is achieved by an agrochemical composition suitable for seed treatment comprising a herbicide which is mobile in the soil, and an adhesive polymer. In the context of this application the wording "herbicide suitable for seed treatment" or "seed treatment herbicide" refers to herbicides and/or their metabolites that can be applied to a seed and which exhibit, after sowing, herbicidal activity. This herbicidal activity is observed through a considerable reduction of weeds and weed biomass compared to untreated seeds, or even absence of weeds around the location of the planted seed. In an aspect of the invention, the herbicide demonstrates herbicidal activity within a circle of at least 1 cm around a seed treated with the herbicide and planted in soil. Preferably, the herbicide demonstrates herbicidal activity within a circle of at least 2 cm, more preferably a circle of at least 5 cm and most preferably a circle of at least 10 cm around the treated and planted seed.

In addition, the herbicide suitable for seed treatment generally does not readily disintergrate or deteriorate in soil, but instead the herbicide preferably remains in the soil in such amounts and for such periods of time that it can still exhibit herbicidal efficacy and is capable to control weeds. An example of a herbicide which readily deteriorates in soil and is not suitable as a seed treatment herbicide is glyphosate.

This herbicidal activity can generally be achieved by a herbicide that is mobile in the soil. In the context of the present application the wording "mobile in the soil" means that the herbicide once being applied to the soil on a treated seed migrates through the soil and controls weeds, the migration being a lateral movement, or a combined lateral and horizontal movement. The language "control of weeds" refers to the control of weeds or other vegetation that emerges out of the soil above the soil surface and becomes visible to the spectator, this weed control is not or not only directed to the control of parasitic weeds like Orobanche. The soil can be any type of soil known in the art and available for agriculture.

In an aspect of the invention, the herbicide of the invention exhibits a vapour pressure of at least 0.01 mPa, preferably at least 0.02 mPa, more preferably at least 0.05 mPa, more preferably at least 0.1 mPa, more preferably at least 0.2 mPa, more preferably at least 0.3 mPa, more preferably at least 0.5 mPa, and most preferably at least 1 mPa at 25 °C and ambient pressure (generally 1 bar). Generally, the herbicide exhibits a vapour pressure at 25 °C and ambient pressure of at most 4500 mPa, preferably at most 1000 mPa, more preferably at most 100 mPa, more preferably at most 50 mPa, and most preferably at most 20 mPa. Herbicides having such relatively high vapour pressures are capable of migrating laterally through soil, and exhibit herbicidal efficacy away from the seed onto which the herbicide is applied.

Suitable examples of herbicides of the invention include acetalinides, ALS inhibitors, HPPD herbicides, PPO herbicides, hormones, (thio)carbamates, dinitroanilines, and hydroxybenzonitril. Particular examples of herbicides include 2,3,6-TBA, 2,4,5-T, 2,4-D, 2,4-DB, 4-CPA, acetochlor, acifluorfen, acifluorfen-sodium, aclonifen, alachlor, allidochlor, aminopyralid, anilofos, atrazine, azafenidin, barban, benazolin, bentazone, benzobicyclon, benzofenop, bifenox, bromoxynil, butachlor, butafenacid, chloramben, chloraxuron, chlorbromuron, chloretazate, chlorfenac, chlorfurenol, chloridazon, chlorsulfuron, chlorthal-dimethyl, cinidon-ethyl, cinmethylin, clodinafob, clomazone, clomethoxyfen, cloprop, clopyralid, cyanazine, dalapon, di-allate, dicamba, dichlobenil, dichlorprop, dichlorprop-p, diclofop, diclofop-methyl, dimefuron, dimethachlor, diuron, EPTC, ethofumesate, fenoprop, fenoxaprop-p-ethyl, fentrazanide, flamprop, flamprop-m-isopropyl, fluazolate, fluchloralin, flufenpyr-ethyl, fluoroglycofen, flupoxam, fluthiacet-methyl, fomesafen, halosulfuron-methyl, haloxyfop, haloxyfop-ethyl, haloxyfop-p, haloxyfop-p-methyl, imazethapyr, indanofan, isoxaflutole, linuron, MCPA, MCPB, mecoprop-p, mesotrione, metamifop, metazachlor, methalochlor, methazole, metosulam, monuron, napropamide, neburon, nitrofen, norflurazon, orbencarb, oxadiargyl, oxadiazon, oxaziclomefone, oxyfluorfen, paraquat, paraquatdichloride, pendimethalin, pentanochlor, picloram, pretilachlor, propachlor, propanil, propaquizafob, propazine, propisochlor, propyzamide, prosulfuron, pyraclonil, pyraflufen, pyraflufen-ethyl, pyrazoxyfen, pyrithiobac-sodium, quinclorac, quizalofob-p-tefuryl, quizalofopethyl, saflufenacil, simazine, S-MOC, sodium chlorate, TCA-sodium, tebutam, tembotrione, terbacil, terbutylazine, thenylchlor, thiobencarb, tri-allate, triasulfuron, triclopyr, trietazine, trifluralin, and any salts or acid derivatives thereof.

Preferably, the herbicide of the invention is a herbicide having a vapour pressure exceeding 0.015 mPa including 2,3,6-TBA, 2,4-D, 4-CPA, acetochlor, acifluorfen, aclonifen, alachlor, anilofos, atrazine, barban, bentazone, benzobicyclon, bifenox, bromoxynil, butachlor, chloramben, chlorbromuron, chlorfurenol, chlorthal-dimethyl, cinmethylin, clomazone, clomethoxyfen, clopyralid, di-allate, dicamba, dichlobenil, dichlorprop-p, diclofop-methyl, dimethachlor, EPTC, ethofumesate, fenoprop, fentrazanide, flamprop-m-isopropyl, fluchloralin, flupoxam, haloxyfop-p-methyl, indanofan, linuron, MCPA, mecoprop-p, metamifop, metazachlor, methalochlor, methazole, monuron, napropamide, neburon, nitrofen, orbencarb, oxadiazon, oxyfluorfen, pendimethalin, pentanochlor, pretilachlor, propachlor, propanil, propisochlor, propyzamide, pyraflufen, pyrazoxyfen, S-MOC, tebutam, terbacil, terbutylazine, thenylchlor, thiobencarb, tri-allate, triclopyr, trietazine, trifluralin, and any salts or acid derivatives thereof.

More preferably, the herbicide of the invention is a herbicide having a vapour pressure exceeding 0.2 mPa including 2,3,6-TBA, alachlor, anilofos, butachlor, chloramben, chlorthal-dimethyl, cinmethylin, clomazone, clomethoxyfen, clopyralid, di-allate, dicamba, dichlobenil, diclofop-methyl, dimethachlor, EPTC, ethofumesate, fluchloralin, linuron, MCPA, mecoprop-p, methalochlor, methazole, nitrofen, orbencarb, oxadiazon, pendimethalin, pentanochlor, propachlor, propisochlor, pyraflufen, S-MOC, tebutam, thiobencarb, tri-allate, trietazine, trifluralin, and any salts or acid derivatives thereof.

The herbicide of the invention can be applied in an amount of between 0.1 and 200 grams of herbicide per 100 kg of seeds, preferably between 1 and 150 grams per 100 kg seeds, more preferably between 2 and 100 grams per 100 kg seeds, and most preferably between 4 and 50 grams per 100 kg seeds. The rate of herbicide applied to seed may vary depending for example on the crop, the variety, the soil, the weed species and the climatic conditions in which the seeds are to be planted. In an embodiment, the herbicide is applied at a rate of 0.01 to 2, preferably 0.03 to 1.5, mg ai /seed, depending on the crop. It is within the skills of an artisan in seed treatment to adapt the amount of herbicide to any particular situation to obtain satisfactory results without undue experimentation. In a particular aspect of the invention, the amount of herbicide is chosen such that the herbicide controls weeds at some distance from the seed.

In a further aspect of the invention, the composition of the invention further comprises a herbicide safener or safener. In the context of the present specification the wording "safener" or "herbicide safener" refer to compounds capable of considerably reducing or eliminating the phytotoxic effect of a herbicide of the invention on the crop seed. In one embodiment, the safener has a vapour pressure lower than the vapour pressure of the herbicide. In this way the safener concentration close to the treated seed will remain high while the herbicide concentration will decrease faster as the higher vapour pressure causes quicker herbicide movement away from the seed. In an aspect of the invention, the safener of the invention exhibits a vapour pressure at 25 °C and ambient pressure of at most 100 mPa, preferably at most 50 mPa, more preferably at most 20 mPa, more preferably at most 10 mPa, more preferably at most 5 mPa, and most preferably at most 1 mPa.

Examples of such (herbicide) safeners include chemical safeners selected from M-12874 ([3-(2,2-Dichloro-acetyl)-2-methylthiazolidin-2-yl]-acetic acid methyl ester); R-29148 (2,2-Dichloro-1-(2,2,5-trimethyl-oxazolidin-3-yl)-ethanone); furilazole ((RS)-3-dichloroacetyl-5-(2-furyl)-2,2-dimethyloxazolidine); flurazole (benzyl 2-chloro-4-trifluoromethyl-1,3-thiazole-5-carboxylate); benoxacor ((?)-4-dichloroacetyl-3,4-dihydro-3-methyl-2 *H*-1,4-benzoxazine); fluxofenim (4'-chloro-2,2,2-trifluoroacetophenone *O*-1,3-dioxolan-2-ylmethyloxamine); dichlormid (*N*,*N* - diallyl-2,2-dichloroacetamide); oxabetrinil (( *Z* )-1,3-dioxolan-2-ylmethoxyimino(phenyl) acetonitrile); cyometrinil (( *Z* )-cyanomethoxyimino(phenyl) acetonitrile); fenclorim (4,6-dichloro-2-phenylpyrimidine); MG 191 (2-dichloromethyl-2-methyl-1,3-dioxolane); fenchlorazole-ethyl (ethyl 1-(2,4-dichlorophenyl)-5-(trichloromethyl)-1 H-1,2,4-triazole-3-carboxylate); cloquintocet-mexyl (1-methylhexyl (5-chloroquinolin-8-yloxy)acetate); TI-35 (1-(dichloroacetyl)hexahydro-1 *H*-azepine); AD 67 (4-(dichloroacetyl)-1-oxa-4-azaspiro[4,5]decane); mefenpyr-diethyl (diethyl ( *RS* )-1-(2,4-dichlorophenyl)-5-methyl2-pyrazoline-3,5-dicarboxylate); dicyclonon (( *RS* )-1-dichloroacetyl-3,3,8a-trimethylperhydropyrrolo[1,2- a ]pyrimidin-6-one); dietholate ( O,O -diethyl O -phenyl phosphorothioate); isoxadifen-ethyl (4.5-dihydro-5,5-diphenyl-1,2-oxazole-3-carboxylic acid); mephenate (4-chlorophenyl methylcarbamate); DKA-24 (N¹ N ² -diallyl=N² - dichlorocetylglycinamide); NAK (dipotassium naphthalene-1,8-dicarboxylate monohydrate); phenoxathiine-4-carboxylic acid; 4H-1-Benzopyran-4-acetic acid, 4-carboxy-2,3-dihydro-; methyl 5-[2-chloro-4-(trifluoromethyl)phenoxy]-2-(2-methoxy-2-oxoethoxy)benzoate; benzoic acid, 2-(carboxymethoxy)-5-[2-chloro-4-(trifluoromethyl)phenoxy]-, diammonium salt; methanone, (2-butoxy-3,4-dimethoxy-6-methylphenyl)(2,6-dichlorophenyl)-; methyl 1-benzothiophene-5-carboxylate 1,1-dioxide and cyprosulfamid (N-[4-(cyclopropylcarbamoyl)phenylsulfonyl]-2-methoxybenzamide ).

Preferably, the safener of the invention is a safener having a vapour pressure below 10 mPa including benoxacor, cloquintocet-mexyl, fenchlorazole-ethyl, fenclorim, flurazole, furilazole, fluxofenim, mefenpyr, and oxabetrinil.

More preferably, the safener of the invention is a safener having a vapour pressure below 1 mPa including benoxacor, cloquintocet-mexyl, fenchlorazole-ethyl, flurazole, furilazole, mefenpyr, and oxabetrinil.

The composition of the invention further comprises an adhesive polymer. The adhesive polymer serves to sufficiently adhere the herbicide of the invention to the seed so that the herbicide is immobilized and/or stabilized during seed storage and transport, and sowing of seeds treated with the composition of the invention. The adhesive polymer moreover enables convenient application of the composition of the invention to a seed enabling appropriate coverage of the composition onto each single seed. It allows the composition to be applied to the seeds in one go instead of for example first applying a porous carrier onto which in a second step the herbicide is applied. Furthermore, the polymer generally aids in the prevention of considerable dust-off of the herbicide from the seed into its surroundings. The polymer also allows the seed treatment composition to be aqueous with a considerably reduced amount of organic solvents or with hardly any organic solvent at all (i.e. the amount of organic solvent being 0.05 wt% or lower based on the total weight of the composition of the invention).

The adhesive polymer of the invention may be a polymer selected from water-soluble and water-dispersible film-forming polymers. Suitable polymers have a number average molecular weight of at least about 1,000 up to about 100,000; more specifically at least about 5,000, up to about 100,000. The compositions generally contain from about 0.01 to about 10, preferably about 0.05 to about 8%, more preferably about 0.1 to about 5%, especially about 0.5% to about 4% by weight of the composition of polymer. In a specific embodiment, the compositions contain from about 1.0% up to about 4% by weight of a film-forming polymer (b). In an embodiment, the compositions contain about 0.05 to 1% by weight of the adhesive and film-forming polymer.

Examples of suitable polymers include alkyleneoxide random and block copolymers such as ethylene oxide-propylene oxide block copolymers (EO/PO block copolymers) including both EO-PO-EO and PO-EO-PO block copolymers, ethylene oxide-butylene oxide random and block copolymers, C₂₋₆ alkyl adducts of ethylene oxide-propylene oxide random and block copolymers, C₂₋₆ alkyl adducts of ethylene oxide-butylene oxide random and block copolymers; and polyoxyethylene-polyoxypropylene monoalkylethers such as methyl ether, ethyl ether, propyl ether, butyl ether or mixtures thereof; and vinylacetate/vinylpyrrolidone copolymers; and alkylated vinylpyrrolidone copolymers; polyvinylpyrrolidone; and polyalkyleneglycol including the polypropylene glycols and polyethylene glycols.

Specific examples of suitable polymers include Pluronic P103 (BASF) (EO-PO-EO block copolymer), Pluronic P65 (BASF) (EO-PO-EO block copolymer), Pluronic P108 (BASF) (EO-PO-EO block copolymer), Vinamul 18160 (National Starch) (polyvinylacetate), Agrimer 30 (ISP) (polyvinylpyrrolidone), Agrimer VA7w (ISP) (vinyl acetate/vinylpyrrolidone copolymer), Agrimer AL 10 (ISP) (alkylated vinylpyrrolidone copolymer), PEG 400 (Uniqema) (polyethylene glycol), Pluronic R 25R2 (BASF) (PO-EO-PO block copolymer), Pluronic R 31 R1 (BASF) (PO-EO-PO block copolymer) and Witconol NS 500LQ (Witco) (butanol PO-EO copolymer).

In an embodiment, an additional agrochemical compound, such as active ingredient(s) also referred to as additional pesticides, can be used with each composition according to the present invention. Therefore, each of the compositions of the present invention may be mixed with, for example, one or more other known pesticides, such as other fungicides, insecticides, nematicides, etc. The use of additional agents, such as other active ingredients, can be for reasons, for example, broader spectrum control (e.g. wider variety of pests, diseases, etc), lower rates, synergy and economy. A skilled person would understand that a single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

The composition of the invention may comprise a herbicides suitable for seed treatment and one or more insecticides, or a herbicide and one or more fungicides, or a herbicide and one or more nematicides. The invention also pertains to such compositions having two or more herbicides suitable for seed treatment. The invention further pertains to compositions comprising the herbicide and at least two different pesticides with different indications, e.g. a fungicide and an insecticide, a fungicide and a nematicide or an insecticide and a nematicide. Optionally, the aforementioned compositions further comprise a (herbicide) safener.

In one embodiment of the invention the additional agrochemical compound is an insecticide which is selected from the group consisting of neonicotinoids, carbamates, diamides, spinosyns, phenylpyrazoles, pyrethroids and sulfoxaflor. Examples of neonicotinoids are thiamethoxam, clothianidin, imidacloprid, acetamiprid, dinotefuran, nitenpyram and thiacloprid. Preferred neonicotinoids are thiamethoxam, imidacloprid and clothianidin. Examples of carbamates include thiodicarb, aldicarb, carbofuran, furadan, fenoxycarb, carbaryl, sevin, ethienocarb, and fenobucarb. Examples of diamides include chlorantraniliprole, cyantraniliprole, and flubendiamide. Examples of spinosyns include spinosad and spinetoram. Examples of pyrethoids include lambda-cyhalothrin, gammacyhalothrin, and tefluthrin. An example of phenylpyrazole is fipronil. Of these insecticides neonicotinoids are preferred.

In another embodiment of the invention the additional agrochemical compound is a fungicide. The fungicide is preferably selected from azoxystrobin, trifloxystrobin, fluoxastrobin, cyproconazole, difenoconazole, prothioconazole, tebuconazole, triticonazole, fludioxonil, thiabendazole, ipconazole, cyprodinil, myclobutanil, metalaxyl, metalaxyl-M (also known as mefenoxam), ortho-cyclopropyl-carboxanilide of formula (α) 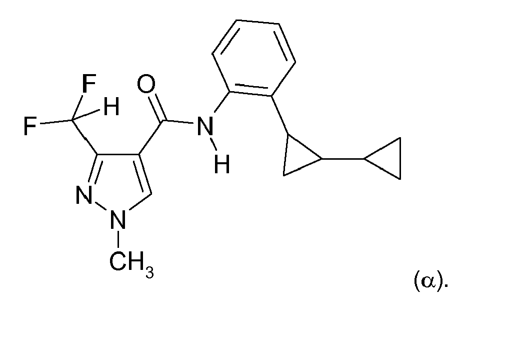 and a compound of formula (β)

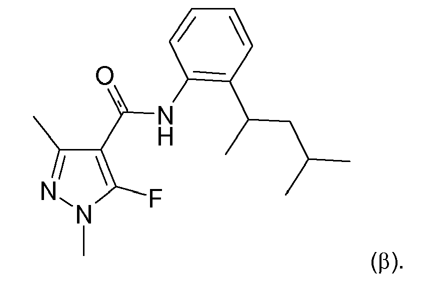

In a further aspect of the invention the additional agrochemical compound is a nematicide. The nematicide can be any nematicide known in the art. Examples include an avermectin (e.g., abamectin), carbamate nematicides (e.g., aldicarb, thiadicarb, carbofuran, carbosulfan, oxamyl, aldoxycarb, ethoprop, methomyl, benomyl, alanycarb, iprodione), organophosphorus nematicides (e.g., phenamiphos (fenamiphos), fensulfothion, terbufos, fosthiazate, dimethoate, phosphocarb, dichlofenthion, isamidofos, fosthietan, isazofos ethoprophos, cadusafos, terbufos, chlorpyrifos, dichlofenthion, heterophos, isamidofos, mecarphon, phorate, thionazin, triazophos, diamidafos, fosthietan, phosphamidon, imicyafos), and certain fungicides, such as captan, thiophanate-methyl and thiabendazole. Also included as a nematicide is a compound of formula X, 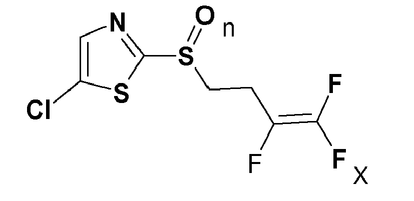 wherein n is 0, 1 or 2 and the thiazole ring may be optionally substituted. Abamectin, aldicarb, thiadicarb, dimethoate, methomyl, a compound of formula X and oxamyl are preferred nematicides for use in this invention.

In addition, nematicidally active biological agents can be included in the compositions of the invention. The nematicidally active biological agent refers to any biological agent that has nematicidal activity. The biological agent can be any type known in the art including bacteria and fungi. The wording "nematicidally active" refers to having an effect on, such as reduction in damage caused by, agricultural-related nematodes. The nematicidally active biological agent can be a bacterium or a fungus. Preferably, the biological agent is a bacterium. Examples of nematicidally active bacteria include Bacillus firmus, Bacillus cereus, Bacillus subtilis, and Pasteuria penetrans. A suitable Bacillus firmus strain is strain CNCM I-1582 which is commercially available as BioNem^{™}. A suitable Bacillus cereus strain is strain CNCM I-1562. Of both Bacillus strains more details can be found in US 6,406,690.

The mass ratio of the herbicide and the total of additional pesticides may vary depending on the specific ingredient and how many ingredients are present in the composition. Generally, the mass ratio between the herbicide and the additional pesticides in any composition of the present invention, independently of one another, is from 100:1 to 1:100, including from 99:1, 98:2, 97:3, 96:4, 95:5, 94:6, 93:7, 92:8, 91:9, 90:10, 89:11, 88:12, 87:13, 86:14, 85:15, 84:16, 83:17, 82:18, 81:19, 80:20, 79:21, 78:22, 77:23, 76:24, 75:25, 74:26, 73:27, 72:28, 71:29, 70:30, 69:31, 68:32, 67:33, 66:34, 65:45, 64:46, 63:47, 62:48, 61:49, 60:40, 59:41, 58:42, 57:43, 56:44, 55:45, 54:46, 53:47, 52:48, 51:49, 50:50, 49:51, 48:52, 47:53, 46:54, 45:55, 44:56, 43:57, 42:58, 41:59, 40:60, 39:61, 38:62, 37:63, 36:64, 35:65, 34:66, 33:67, 32:68, 31:69, 30:70, 29:71, 28:72, 27:73, 26:74, 25:75, 24:76, 23:77, 22:78, 21:79, 20:80, 19:81, 18:82, 17:83, 16:84, 15:85, 14:86, 13:87, 12:88, 11:89, 10:90, 9:91, 8:92, 7:93, 6:94, 5:95, 4:96, 3:97, 2:98, to 1:99. Preferred mass ratios between the herbicide and the additional pesticides are from 75:1 to 1:75, more preferably, 50:1 to 1:50, especially 25:1 to 1:25, advantageously 10:1 to 1:10, such as 5:1 to 1:5.

Depending upon the seed to be treated, the conditions under which it is to be stored, and the soil and weather conditions under which it is expected to germinate and grow, the combinations of the present invention may include a wide spectrum of one or more additives. Such additives include, but are not limited to, uv-protectants, pigments, dyes, extenders such as flour, dispersing agents, excipients, anti-freezing agents, preservatives, seed safeners, seed conditioners, micronutients, fertilizers, biocontrol agents, surfactants, sequestering agents, plasticizers, colorants, brighteners, emulsifiers, flow agents such as calcium stearate, talc and vermiculite, coalescing agents, defoaming agents, humectants, thickeners, waxes, bactericides, insecticides, pesticides, and fillers such as cellulose, glass fibers, clay, kaolin, talc, pulverized tree bark (e.g., Douglas fir bark or alderbark), calcium carbonate and wood meal, and odor-modifying agents. Typical excipients include finely divided mineral substances such as pumice, attapulgite, bentonite, kaoline zeolite, diatomite, and other clays, modified diatomaceous adsorbents, charcoal, vermiculite, finely divided organic substances such as peat moss, wood powder, and the like. Such additives are commercially available and known in the art.

The herbicide of the invention, and optionally any other pesticides, may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the ingredients to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Each of the compositions of the present invention may also comprise alkali metal, alkaline earth metal, metal, or ammonium salts. Zinc chloride and alkali metal, alkaline earth metal, or ammonium salts of mineral acids, especially nitrates, phosphates, sulfates, chlorides, and carbonates of sodium, potassium, ammonium, magnesium, and calcium are preferred.

A preferred embodiment pertains to a composition of the invention comprises additionally a colouring agent.

Generally, the herbicide are in the form of a formulation composition with one or more of customary formulation auxiliaries. Examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

The tank-mix compositions are generally prepared by diluting with a solvent (for example, water) the one or more pre-mix compositions containing different pesticides, and optionally further auxiliaries.

Normally, a tank-mix formulation for seed treatment application comprises 0.25 to 80 weight % (wt%), especially 1 to 75 wt%, of the desired ingredients, and 99.75 to 20 wt%, especially 99 to 25 wt%, of a solid or liquid auxiliaries (including, for example, a solvent such as water), where the auxiliaries can be a surfactant in an amount of 0 to 40 wt%, especially 0.5 to 30 wt%, based on the total weight of the tank-mix formulation.

Typically, a pre-mix formulation for seed treatment application comprises 0.5 to 99.9 wt%, especially 1 to 95 wt%, of the desired ingredients, and 99.5 to 0.1 wt%, especially 99 to 5 wt%, of a solid or liquid adjuvant (including, for example, a solvent such as water), where the auxiliaries (or adjuvant) can be a surfactant in an amount of 0 to 50 wt%, especially 0.5 to 40 wt%, based on the total weight of the pre-mix formulation.

Whereas commercial products will preferably be formulated as concentrates (e.g., pre-mix composition (formulation)), the end user will normally employ dilute formulations (e.g., tank mix composition).

The Examples which follow serve to illustrate the invention.

### Formulation Examples

| Wettable powders | a) | b) | c) |
|---|---|---|---|
| active ingredients | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether | - | 2 % | - |
| (7-8 mol of ethylene oxide) | | | |
| highly dispersed silicic acid | 5 % | 10 % | 10 % |
| Kaolin | 62 % | 27 % | - |

The combination is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredients | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The combination is thoroughly mixed with the adjuvants and the mixture is thoroughly ground in a suitable mill, affording powders that can be used directly for seed treatment.

| Emulsifiable concentrate | |
|---|---|
| active ingredients | 10 % |

| octylphenol polyethylene glycol ether | 3 % |
|---|---|
| (4-5 mol of ethylene oxide) | |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredients | 5 % | 6 % | 4 % |
| Talcum | 95 % | - | - |
| Kaolin | - | 94 % | - |
| mineral filler | - | - | 96 % |

Ready-for-use dusts are obtained by mixing the combination with the carrier and grinding the mixture in a suitable mill. Such powders can also be used for dry dressings for seed.

| Extruder granules | |
|---|---|
| Active ingredients | 15 % |
| sodium lignosulfonate | 2 % |
| carboxymethylcellulose | 1 % |
| Kaolin | 82 % |

The combination is mixed and ground with the adjuvants, and the mixture is moistened with water. The mixture is extruded and then dried in a stream of air.

| Coated granules | |
|---|---|
| Active ingredients | 8 % |
| polyethylene glycol (mol. wt. 200) | 3 % |
| Kaolin | 89 % |

The finely ground combination is uniformly applied, in a mixer, to the kaolin moistened with polyethylene glycol. Non-dusty coated granules are obtained in this manner.

### Suspension concentrate

| | |
|---|---|
| active ingredients | 40 % |
| propylene glycol | 10 % |

| | |
|---|---|
| nonylphenol polyethylene glycol ether (15 mol of ethylene oxide) | 6 % |
| Sodium lignosulfonate | 10 % |
| carboxymethylcellulose | 1 % |
| silicone oil (in the form of a 75 % emulsion in water) | 1 % |
| Water | 32 % |

The finely ground combination is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

### Flowable concentrate for seed treatment

| | |
|---|---|
| active ingredients | 40 % |
| propylene glycol | 5 % |
| copolymer butanol PO/EO | 2 % |
| Tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground combination is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Preferred seed treatment pre-mix formulations are aqueous suspension concentrates.

The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

The seed treatment compositions of the invention can also comprise or may be applied together and/or sequentially with further active compounds. These further useful active compounds can be fertilizers or micronutrient donors (such as Mo, Zn and / or Co) or other preparations that influence plant growth, such as inoculants (e.g. a strain of nitrogen-fixing bacteria), plant inducers (e.g. nod factors - see US 2005/187107, which hereby is incorporated).

Methods for applying or treating the composition of the invention on to seeds are known in the art, and include dressing, coating, pelleting and soaking application methods of the seed. In a preferred embodiment, the composition is applied or treated on to the seed by a method such that the germination is not induced; generally seed soaking induces germination because the moisture content of the resulting seed is too high. Accordingly, examples of suitable methods for applying (or treating) a seed is seed dressing, seed coating or seed pelleting and alike.

The seed treatment occurs to an unsown seed, and the term "unsown seed" is meant to include seed at any period between the harvest of the seed and the sowing of the seed in the ground for the purpose of germination and growth of the plant. Treatment to an unsown seed is not meant to include those practices in which the active ingredient is applied to the soil but would include any application practice that would target the seed during the planting process. Preferably, the treatment occurs before sowing of the seed so that the sown seed has been pre-treated with the combination. In particular, seed coating or seed pelleting are preferred in the treatment of the combinations according to the invention. As a result of the treatment, the ingredients in each combination are adhered on to the seed and therefore available for weed and/or pest control.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the ingredients in the combination and adherence thereof to the seeds is desired during propagation material treatment. Treatment could vary from a thin film (dressing) of the formulation containing the combination, for example, a mixture of active ingredient(s), on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

Seeds can be treated by applying thereto the composition of the invention. It is also contemplated that additional pesticides (e.g. insecticides, fungicides, and nematicides) can be applied together with the herbicide. The herbicide and the additional pesticides can be applied simultaneously, e.g. in the same composition, or in any desired sequence e.g. consecutively by applying separate compositions suitable for seed treatment..

An aspect of the present invention includes application of the compositions onto the seed in a targeted fashion, including positioning the ingredients in the composition onto the entire seed or on only parts thereof, including on only a single side or a portion of a single side. One of ordinary skill in the art would understand these application methods from the description provided in EP 954 213 and WO 06/112700.

Each combination according to the present invention is suitable for plants of the crops: cereals, such as wheat, barley, rye and oats; rice (dry seeded, wet-sown, nursery, transplanted); maize (silage maize, sweet corn and field corn) or sorghum; beet, such as sugar or fodder beet; fruit, for example pomaceous fruit, stone fruit, tree nut or soft fruit, such as apples, pears, plums, peaches, almonds, walnuts, pistachios, cherries or berries, for example strawberries, raspberries or blackberries; leguminous crops, such as beans, lentils, peas or soya; oil crops, such as oilseed rape/canola, mustard, poppies, olives, sunflowers, coconut, castor, cocoa or ground nuts; cucurbits, such as pumpkins, marrow, cucumbers or melons; fibre plants, such as cotton, flax, hemp or jute; citrus fruit, such as oranges, lemons, grapefruit or tangerines; vegetables, such as spinach, lettuce, asparagus, cabbages, iceberg, carrots, onions, tomatoes, paprika, potatoes or bell peppers; Lauraceae, such as avocado, Cinnamonium or camphor; and also tobacco, nuts, coffee, eggplants, sugarcane, tea, pepper, grapevines, hops, the plantain family, latex plants, lawn, turf, fodder grass, and ornamentals, such as petunias, geranium/pelargoniums, pansies and impatiens; and shrubs, broad-leaved trees and evergreens, such as conifers, and fast growing groves such as poplars or willows. In particular, the combination is suitable for coffee, citrus, stone fruits (especially apple, pears, plums, peaches), tree nuts (especially almonds and pistachios), vegetable crops, and forestry crops. In particular, cotton, soya, maize, beet, rice, cereals and vegetables.

Suitable target crops also include modified crop plants of the foregoing crop types. The wording "modified crop plants" refers to both genetically modified or transgenic crop plant as well as crop plants modified through natural selection or conventional breeding. The modified crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or modified plants which are capable of synthesizing such toxins, have been disclosed, for example, in EP 0 374 753, WO 93/07278, WO 95/34656, EP 0 427 529 and EP 0 451 878 and are incorporated by reference in the present application.

In an embodiment of the invention the crop seed is treated with a herbicide which is not phytotoxic to the crop seed. A crop seed may have a natural tolerance to the herbicide. Examples include treating on sulfonyl ureas (e.g. prosulfuron and triasulfuron) on cereals, treating of soybeans with S-metalochlor (S-MOC), and treating of maize with EPTC. Alternatively, the crop seeds can be modified to exhibit a tolerance or resistance to the herbicide(s) with which the seed is treated. Examples include dicamba treated on dicamba tolerant seeds (e.g. corn and soybean seeds), ALS herbicides on ALS tolerant crop seeds, HPPD herbicides on HPPD-tolerant seeds and 2,4-D on 2,4-D tolerant crop seeds.

It is also contemplated that the crop seed having a tolerance for a certain herbicide is treated with a different herbicide. For example, the crop seed may be a glyphosate-tolerant crop seed which is treated with a herbicide other than glyphosate such as dicamba, for example. In one aspect of the invention, the modified crop seed is treated with a safener as described above or is coated with a protective, safening coating. The safener or safening coating serves to considerably reduce or diminish the phytotoxic effect of the herbicide applied onto the seed.

The protective, safening coating can be a polymer coating optionally comprising a filler. The coating may be applied to any type of seed - modified and unmodified crop seeds - and should cover the seed sufficiently so as to considerably reduce or diminish the phytotoxic effect of the herbicide applied onto the seed. Preferably, the safening coating covers the seed at least 80% - meaning that at least 80% of the outer surface of the seed is covered with the safening coating -, preferably at least 90%, more preferably at least 95%, and most preferably the safening coating completely covers the seed surface. The safening coating serves indeed as a protective coating disabling the herbicide to reach the seed, and at the same time it should allow water to migrate through to the seed as well as proper germination. Examples of polymers suitable for use as safening coating include acrylic resins like polymethyl methacrylate, ethylene copolymers like ethylene vinyl acetate, polycarbonates, copolymers of styrene, cellulosic polymers like ethyl cellulose and cellulose acetate; polyvinyl acetate and polyethylene glycol.

In an embodiment of the invention, soybean seeds and modified soybean seeds are treated with a composition of the present invention. In addition, the soybean seeds may be inoculated with an appropriate strain of nitrogen-fixing bacteria for the purpose of promoting plant growth. Preferably, seeds may be inoculated with an effective bacterial strain such as Rhizobium spp. or Azospirillium spp. before sowing. The primary effect of such bacteria is in the fixation of atmospheric nitrogen into a useable form for the plant. Rhizobia bacteria, for example, is especially preferred in order to form nodules on the plant roots that are sustained by the plant and in turn provide nitrogen for the plant as mentioned above.

In a further embodiment, a soybean plant propagation material is treated with a plant inducer, e.g. a nod factor derived from Bradyrhizobium japonicum, Sinorhizobium fredii, Sinorhizobium meliloti, Bradyrhizobium sp. (Arachis), or Rhizobium leguminosarum biovar phaseoli, viceae, or trifolii.

In an aspect, the invention pertains to an agrochemical sowable body comprising an inert material and a herbicide suitable for seed treatment. The herbicide is generally applied to the body using the compositions of the invention. The agrochemical sowable body refers to a body that is sowable, and preferably has a similar size and shape as the crop seed. Examples of such bodies are described in EP 1 124 414, WO 07/067042, and WO 07/067044. It is furthermore contemplated to apply part of the herbicide or any one of the additional pesticides onto the seed and the remaining part onto the sowable inert body. Further details of this application can be found in WO 05/120226. In either of these examples it is preferred that the agrochemical body comprises a non-germinating or inactivated seed (i.e. deliberately inactivated by e.g. irradiation or heating) treated with the agrochemical composition of the invention. It is also contemplated that the agrochemical body comprises a potentially germinating seed that is inactivated through the application of a herbicide of the invention.

Application of the compositions onto the seed also includes controlled release coatings on the seeds, wherein the ingredients of the combinations are incorporated into materials that release the ingredients over time. Examples of controlled release seed treatment technologies are generally known in the art and include polymer films, waxes, or other seed coatings, wherein the ingredients may be incorporated into the controlled release material or applied between layers of materials, or both.

The invention further pertains to a method comprising the step of (i) treating a seed, with a composition as defined above, and (ii) sowing the treated seed, wherein the composition protects against damage caused by weeds and/or undesired plants. Generally, the herbicide used to treat the seeds has a low or no phytoxic effect on the seed. This may be intrinsic, through (genetic) modification of the seed or through application of a safener or a safening coating.

Additionally, the invention pertains to a method comprising the step of (i) sowing a seed and an agrochemical body as defined above, wherein the herbicide protects against damage caused by weeds and/or undesired plants, and wherein the agrochemical body is sowed at a distance of at least 10 cm from the seed. Preferably, the agrochemical body is sowed at a distance of at least 5 cm, more preferable at least 2 cm, and most preferably at least 1 cm from the seed.

In one aspect of the invention, the agrochemical body is sown in between two rows of seeds. Particularly, the agrochemical bodies are sown in one or more rows parallel to and in between two rows of seeds. This application is particularly interesting for crop seeds that are planted in rows that are considerably distant from each other so that it is advantageous to sow the agrochemical bodies in the indicated way so as to control weeds in between the rows. As the agrochemical bodies can be sown simultaneously with the crop seeds, the farmer will not need to apply for an additional, conventional herbicide treatment immediately after sowing.

The method of the invention adds a convenience aspect to the farmer as he may be able to skip a conventional herbicide treatment or perform this at a later stage. The method may further lead to an improvement in the growing (or growth) characteristics of a plant which can manifest itself in a number of different ways, but ultimately it results in a better product of the plant. It can, for example, manifest in improving the yield and/or vigour of the plant or quality of the harvested product from the plant, which improvement may not be connected to the control of weeds or pests, such as fungi, insects and nematodes.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

Use of a term in a singular form also encompasses that term in plural form and vice a versa.

Certain compounds defined in the first aspect are active ingredients for use in the agrochemical industry (also known as pesticides). A description of their structure as well as the structures of other pesticides (e.g., fungicides, insecticides, nematicides) can be found in the e-Pesticide Manual, version 3.1, 13th Edition, Ed. CDC Tomlin, British Crop Protection Council, 2004-05.

## Claims

1. An agrochemical composition suitable for seed treatment comprising a herbicide which is mobile in the soil, and an adhesive polymer.

2. Agrochemical composition according to claim 1 wherein the herbicide demonstrates herbicidal activity within a circle of at least 1 cm around a seed treated with the herbicide and planted in soil.

3. Agrochemical composition according to any one of clamis 1 and 2 wherein the herbicide has a vapour pressure of at least 0.015 mPa at 25 °C.

4. Agrochemical composition according to any one of the preceding claims wherein the herbicide has a vapour pressure of at least 0.2 mPa at 25 °C.

5. Agrochemical composition according to any one of the preceding claims wherein the herbicide is selected from the group consisting of acetanilides, ALS inhibitors, HPPD herbicides, PPO herbicides, hormones, (thio)carbamates, dinitroanilines, and hydroxybenzonitril.

6. Agrochemical composition according to any one of the preceding claims wherein the composition further comprises a safener.

7. An agrochemical sowable body comprising an inert material and a herbicide which is mobile in the soil, wherein the inert material is a non-germinating seed.

8. Process for treating a seed comprising the step of (a) applying an agrochemical composition according to any one of claims 1 to 6 to a seed.

9. Process according to claim 9 further comprising the step of applying a safening coating to the seed prior to step (a) wherein the coating has a safening effect to the herbicide.

10. Process according to any one of claims 8 and 9 wherein the seed is a transgenic seed or a seed having a native trait which seed has a reduced phytotoxicity towards the herbicide.

11. A method comprising the step of (i) treating a seed, with a composition as defined in any one of claims 1 to 6, and (ii) sowing the treated seed, wherein the composition protects against damage caused by weeds and/or undesired plants.

12. A method comprising the step of (i) sowing a seed and an agrochemical body as defined in claim 7, wherein the herbicide protects against damage caused by weeds and/or undesired plants, and wherein the agrochemical body is sowed at a distance of at least 1 cm from the seed.

13. Method according to claim 12 wherein the seed is treated with a safener or a safening coating.

14. Method according to any one of claims 12 and 13 wherein the seed is treated with a herbicide that is not phytotoxic to the seed.

15. Seed treated with the composition according to any one of claims 1 to 6.
